# EUROPÄISCHE PATENTSCHRIFT

(11) **EP 2 837 091 B1**
(45) Veröffentlichungstag und Bekanntmachung des Hinweises auf die Patenterteilung: **09.03.2016**
(21) Anmeldenummer: 13711852.7
(22) Anmeldetag: 12.03.2013
(51) Int. Cl.: H02M 5/12, H02P 13/06, H01F 29/02

(54) **REGELTRANSFORMATOR**
CONTROL TRANSFORMER
TRANSFORMATEUR DE RÉGLAGE

(30) Priorität: 10.04.2012 DE 102012103048
(43) Veröffentlichungstag der Anmeldung: 18.02.2015
(73) Patentinhaber: Maschinenfabrik Reinhausen GmbH, 93059 Regensburg (DE)
(72) Erfinder: VON BLOH, Jochen, 52072 Aachen (DE); DOHNAL, Dieter, 93138 Lappersdorf (DE); VIERECK, Karsten, 93059 Regensburg (DE)
(86) Internationale Anmeldenummer: PCT/EP2013/054925
(87) Internationale Veröffentlichungsnummer: WO 2013/152910

(56) Entgegenhaltungen:
- EP-A2- 0 913 752
- WO-A2-2012/079666
- KARADY G G ET AL: "Integrated PWM and transformer switching technique for AC voltage regulation", APPLIED POWER ELECTRONICS CONFERENCE AND EXPOSITION, 1994. APEC '94. C ONFERENCE PROCEEDINGS 1994., NINTH ANNUAL ORLANDO, FL, USA 13-17 FEB. 1994, NEW YORK, NY, USA,IEEE, 13. Februar 1994 (1994-02-13), Seiten 961-967, XP010118467, DOI: 10.1109/APEC.1994.316295 ISBN: 978-0-7803-1456-6
- DEMIRCI; TORREY; DEGENEFF; SCHAEFFER; FRAZER: "A new approach to solid-state on load tap changing transformers", IEEE TRANSACTIONS ON POWER DELIVERY, Bd. 13, Nr. 3, Juli 1998 (1998-07), XP011049528, in der Anmeldung erwähnt

## Beschreibung

Die Erfindung betrifft einen Regeltransformator, genauer gesagt einen Phasenschiebertransformator.

Ein Phasenschiebertransformator, auch Querregeltransformator, ist ein spezieller Leistungstransformator, der im Bereich elektrischer Wechselstromnetze dazu dient, den elektrischen Lastfluss gezielt zu steuern.
Im Gegensatz zu der üblichen Anwendung von Transformatoren, nämlich der Umsetzung von Wechselspannungen auf verschiedene Spannungsniveaus, dienen Phasenschiebertransformatoren, wie der Name bereits sagt, als Phasenschieber, um die Leistung durch eine elektrische Leitung gezielt zu beeinflussen. Wenn beispielsweise zwischen zwei Schaltanlagen oder Umspannwerken mehrere Leitungen auf unterschiedlichen Wegen geführt sind, kann mittels Phasenschiebertransformatoren beeinflusst werden, wie die übertragene Leistung aufgeteilt wird. Ein typischer Anwendungsfall ist dann gegeben, wenn die vorhandenen Leitungen unterschiedliche Transportkapazitäten aufweisen.

Ein derartiger Phasenschiebertransformator, sein Aufbau und seine Regelmöglichkeiten sind in dem Fachbuch Krämer: On-Load Tap-Changers for Power Transformers, 2000, S. 196 ff. ausführlich dargestellt.
Der gezeigte Phasenschiebertransformator mit hoher Durchgangsleistung ist zweigeteilt und besteht aus einem Serientransformator und einem Erregertransformator zur eigentlichen Regelung ("Shunt-Transformator"), über den mittels eines Stufenschalters eine bestimmte Phasenverschiebung eingestellt werden kann. Beim üblicherweise eingesetzten Dreiphasenwechselstrom sind für jeden Außenleiter sowohl ein Serien- als auch ein Erreger-, d.h. Regeltransformator vorhanden. Ein beispielhafter Phasenschiebertransformator ist auch in karady G. et al.: "Integrated PWM and Transformer Switching Technique for AC Voltage Regulation" , IEEE-APEC 1994, XP 10118467 gezeigt.
Über den Regeltransformator wird pro Phase über den Stufenschalter eine Spannung abgegriffen, die gegenüber der Außenleiterspannung gegen Erde um 90° verschoben ist und über den erläuterten Serientransformator mittels Vektoraddition zu einer phasenverschobenen Spannung führt.

Diese Art der Lastbeeinflussung, typisch für einen Phasenschiebertransformator, wird auch als Querregelung bezeichnet, im Gegensatz zu der Längsregelung eines Standardtransformators.
Der Lastfluss durch den Phasenschiebertransformator kann dabei ebenfalls in beiden Richtungen erfolgen.
Der Einstellbereich des Phasenwinkels ist je nach Auslegung verschieden. Er liegt typischer Weise im Bereich von ±10° und kann bei speziellen Ausführungen bis zu 30° betragen. Dabei sind unterschiedliche Schaltungsvarianten möglich, von denen eine als Beispiel auf S. 197 des o.a. Fachbuches gezeigt ist.
Neben der 90"-Querregelung sind auch andere Methoden bekannt, die als 60°- bzw. 30°-Schrägregelung bezeichnet werden.

Das Verfahren der 60°-Schrägregelung beruht darauf, dass die benötigte Erregerspannung über einen Wicklungsteil des Nachbarschenkels eines Transformatorkerns erzeugt wird und diese vektoriell zu der Spannung der Stammwicklung addiert wird. Der Grad der Phasenverschiebung kann dabei ebenfalls durch einen Stufenschalter eingestellt werden.
Derartige Verschaltungen der Wicklungen werden üblicherweise im Inneren des Transformatorkessels ausgeführt, da eine Umschaltung der Betriebsart des Transformators in der Regel nicht vorgesehen ist. Vorgesehen sind lediglich Umklemmeinrichtungen, mit der die Verschaltung der Wicklung in spannungslosen Zustand geändert werden kann.

Die bekannten Regeltransformatoren mit ihren inneren Verschaltungen von Transformatorenwicklungen erlauben daher lediglich, konstruktionsbedingt, die Festlegung auf eine konkrete Betriebsart des Transformators - wie z.B. eine Anwendung als Phasenschieber oder im einfachsten Fall als bekannter Längsregler zur Spannungsregelung eines Energieversörgungsnetzes.
Eine virechselnde Betriebsart ist bei den bekannten Regeltransformatoren nicht vorgesehen und kann im laufenden Betrieb eines Transformators nur mit extrem hohem Aufwand realisiert werden, da die Schaltelemente nicht so gesteuert werden können, dass sie bei minimaler Beanspruchung der Schaltstrecken eine Betriebsumschaltung des Transformators vornehmen können.

Aufgabe der Erfindung ist es demnach, einen Regeltransformator anzugeben, bei dem auf einfache Weise mit nur wenigen Schaltelementen eine Betriebsumschaltung zwischen Längsregelbetrieb, d.h. Spailnungsregelung, einerseits und Phasenschieberbetrieb, d.h. Drehung der Phasenlage von Ein- und Ausgangsspannung, andererseits, des gleichen Transformators eingestellt werden kann.

Diese Aufgabe wird durch einen Regeltransformator mit Halbleiter-Schaltelementen mit den Merkmalen der beiden nebengeordneten Patentansprüche gelöst. Der Patentanspruch 1 betrifft dabei einen Regeltransformator mit Stamm- und Regelwicklung, Patentanspruch 2 einen solchen mit zusätzlich zu- und gegenschaltbarer Grobstufe.

Die allgemeine erfinderische Idee bei beiden Ausführungsformen besteht darin, einen Regeltransformator mit Halbleiter-Schaltelementen durch weitere elektrische Verbindungsleitungen und diese beschaltende weitere Halbleiter-Schaltelemente derart weiterzuentwickeln, dass er auf einfache Weise sowohl für die Funktionalität als Längsregler als auch als Phasenschieber, d.h. Schrägregler, vorsehbar ist.

Ein modularer Regeltransformator mit Halbleiter-Schaltelementen ist prinzipiell bereits aus der Veröffentlichung Demirci, Torrey, Degeneff, Schaeffer, Frazer: "A new approach to solid-state on load tap changing transformers", IEEE Transactions on Power Delivery, Vol. 13, Nr. 3, July 1998, bekannt. Er ist zur Längsregelung verwendbar und wird weiter unten noch einmal erläutert.

Die Erfindung soll nachstehend anhand von Zeichnungen beispielhaft noch näher erläutert werden.

### Es zeigen:

- Fig. 1:: Einen bekannten Regeltransformator, als Längsregler wirkend
- Fig. 2:: Einen ersten erfindungsgemäßen Regeltransformator als 60°-Schrägregler, 27 Stufen
- Fig. 3:: Einen zweiten erfindungsgemäßen Regeltransformator als 60°-Schrägregler mit Lineargrobstufe.
- Fig. 4:: Die in Figur 2 gezeigt Darstellung; um einige Bezugszeichen erweitert
- Fig. 5:: Ein Zeigerdiagramm eines beispielhaften erfindungsgemäßen Regeltransformators gem. Figuren 2 und 4

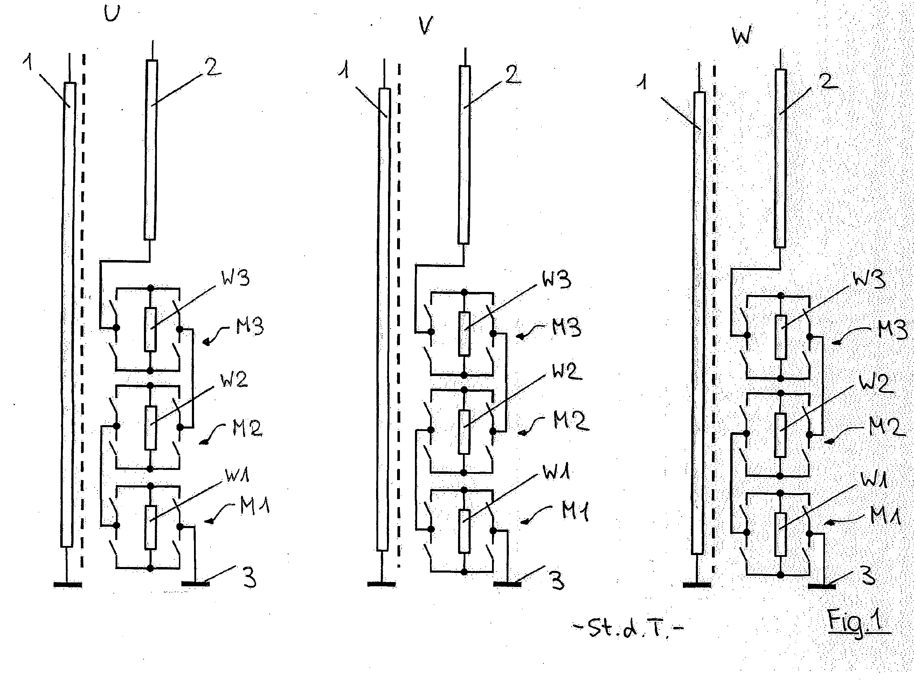

Figur 1 zeigt einen bekannten dreiphasigen zu regelnden Transformator, wie er bereits vorgeschlagen wurde, bestehend aus einer Unterspannungswicklung 1 und einer Oberspannungswicklung 2, mit hier drei separaten Teilwicklungen W1...W3, an die ein modularer Stufenschalter angeschaltet ist, der hier aus drei einzelnen Modulen M1, M2, M3 besteht.
Alle Phasen sind identisch aufgebaut.
Das erste Modul M1 umfasst die erste Teilwicklung W1 sowie beidseitig davon zwei Überbrückungspfade, die jeweils eine Reihenschaltung aus zwei Halbleiter-Schaltelementen umfassen. Jeweils zwischen den beiden in Reihe geschalteten Schaltelementen ist eine Mittenanzapfung vorgesehen.
Die einzelnen Halbleiter-Schaltelemente sind hier wie auch in den nachfolgenden Figuren nur schematisch als einfache Schalter dargestellt. Sie umfassen in der Praxis parallel geschaltete Thyristorpaare, IGBT's oder andere Halbleiter-Schaltelemente. Sie können auch jeweils eine Reihen- oder Parallelschaltung mehrerer solcher einzelner Halbleiter-Schalterelemente umfassen.
Die eine Mittenanzapfung ist mit dem Sternpunkt 3 elektrisch verbunden. Die andere Mittenanzapfung steht mit einer Mittenanzapfung eines zweiten Moduls M2 in Verbindung. Dieses zweite Modul M2 ist identisch aufgebaut; es umfasst ebenfalls eine Teilwicklung W2 sowie die beiden Reihenschaltungen aus jeweils zwei Halbleiter-Schaltelementen. Ebenfalls sind zwischen den jeweiligen Reihenschaltungen wieder Mittenanzapfung vorgesehen. Die Beschaltung der einen Mittelanzapfung mit dem ersten Modul M1 wurde bereits erläutert; die zweite Mittenanzapfung ihrerseits ist mit einer Mittenanzapfung eines dritten Moduls M3 verbunden.
Dieses dritte Modul M3 ist wiederum identisch aufgebaut. Es umfasst wiederum eine Teilwicklung W3 sowie die beiden Reihenschaltungen aus Halbleiter-Schaltelementen sowie die dazwischen liegenden Mittenanzapfungen. Die bisher noch nicht erwähnte Mittenanzapfung des dritten und hier letzten Moduls M3 ist mit dem Ende der Oberspannungswicklung 2 elektrisch verbunden.

Die beschriebenen hier drei Module M1... M3 unterscheiden sich nur durch die Bemessungen der jeweiligen Teilwicklungen W1...W3.
Die Teilwicklung W2 im zweiten Modul M2 weist beispielsweise die dreifache Windungszahl der Teilwicklung W1 im ersten Modul M1 auf. Die Teilwicklung W3 im dritten Modul M3 weist beispielsweise die sechsfache oder auch neunfache Windungszahl der Teilwicklung W1 im ersten Modul M1 auf.
Dieser hier gezeigte Regeltransformator arbeitet als herkömmlicher Längsregler zur Spannungsregelung mit insgesamt 21 Spannungsstufen. Die einzelnen Teilspannungen ergeben sich durch die unterschiedliche Zuschaltung, Gegenschaltung oder Überbrückung der einzelnen Wicklungsteile W1...W3.

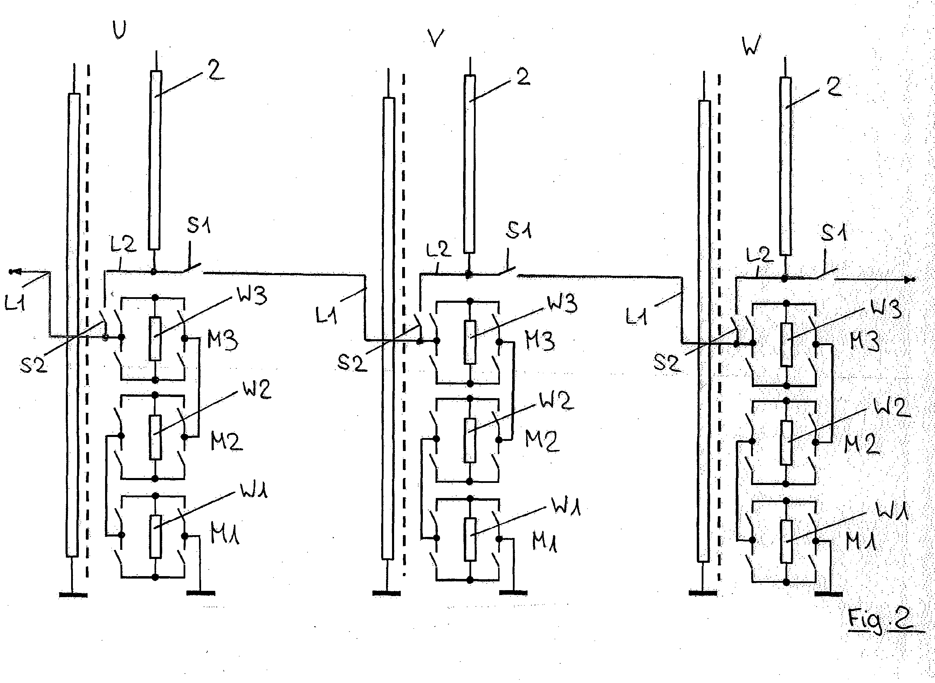

Figur 2 zeigt einen ersten erfindungsgemäßen Regeltransformator als 60°-Schrägregler mit 27 erreichbaren Spannungsstufen. Zusätzlich sind hier jeweils elektrische Verbindungsleitungen L1 und L2 vorgesehen. In jeder der Verbindungsleitungen L1 ist ein elektronisches Schaltelement S1 vorgesehen. Jede der Verbindungsleitungen L1 verbindet dabei die Mittenanzapfung des Moduls M3 jeder Phase mit dem Ende der Stammwicklung 2 der jeweils benachbarten Phase. Eine weitere Verbindungsleitung L2, in der jeweils ein weiteres elektronisches Schaltelement S2 vorgesehen ist, verbindet jeweils diese Mittenanzapfung des Moduls M3 mit dem Ende der Stammwicklung 2 der eigenen Phase.
Die Enden der Stammwicklungen 2 aller drei Phasen sind also durch die Verbindungsleitungen L1 quasi als "Ringleitung" miteinander elektrisch verbunden; die in dieser "Ringleitung" befindlichen Schaltelemente S1 und S2 jeder Phase stellen je nach ihrer Schaltstellung die elektrische Verbindung her - alternativ die elektrische Verbindung zur jeweiligen Mittenanzapfung des entsprechenden Moduls M3 der entsprechenden Phase.
Die Phasenlage des zu addierenden Spannungsvektors wird vom Nachbarschenkel, d.h. der benachbarten Phase, des Transformators vorgegeben. Daraus resultiert ein Phasenwinkel von 60°.

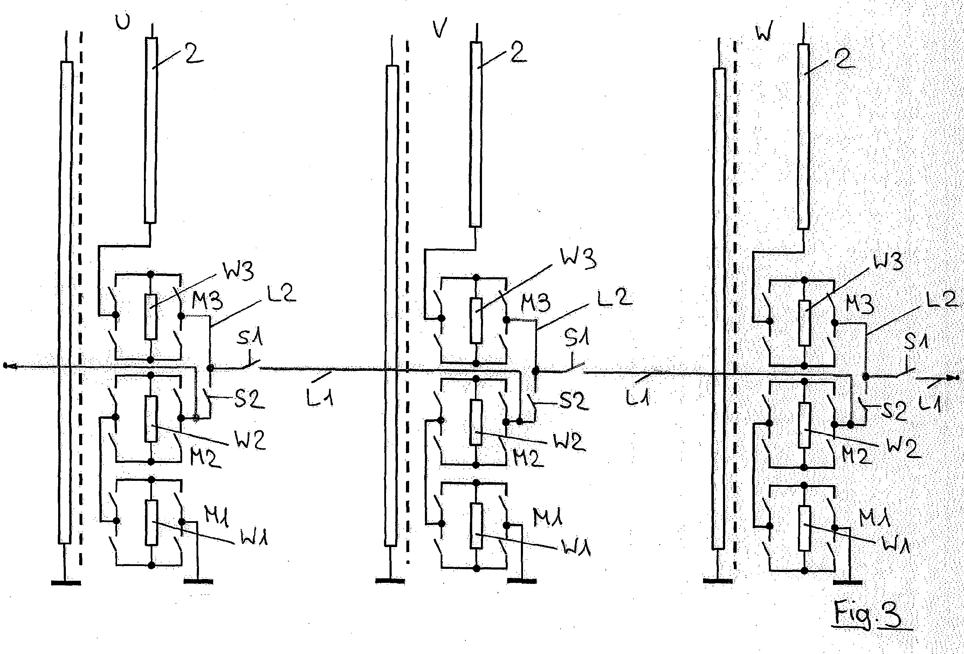

Figur 3 zeigt einen zweiten erfindungsgemäßen Regeltransformator als 60°-Schrägregler mit Lineargrobstufe. Die Grobstufe wird dabei jeweils durch die Teilwicklung W3 jeder Phase gebildet, die durch das jeweilige Modul M3 zu- oder gegenschaltbar zur Stammwicklung 2 ist. Mit anderen Worten: Das Modul M3 betätigt hier die Grobstufe und ist nicht an der eigentlichen Spannungsregelung beteiligt, die bei diesem Beispiel von den Modulen M2 und M1 realisiert wird. Auch hier sind jeweils elektrische Verbindungsleitungen L1 und L2 vorgesehen. In jeder der Verbindungsleitungen L1 ist ganz analog zum ersten Ausführungsbeispiel ein elektronisches Schaltelement S1 vorgesehen. Jede der Verbindungsleitungen L1 verbindet hier die Mittenanzapfung des Moduls M2 jeder Phase mit den Mittenanzapfungen des Moduls M3 der jeweils anderen Phasen - statt jeweils mit dem Ende der Stammwicklung wie weiter oben beschrieben. Die weitere Verbindungsleitung L2, in der hier ebenfalls jeweils ein weiteres elektronisches Schaltelement S2 vorgesehen ist, verbindet jeweils diese Mittenanzapfung des Moduls M2 mit der Mittenanzapfung des jeweiligen Moduls M3 der eigenen Phase. Die Mittenanzapfungen der Module M3 aller drei Phasen sind also hier durch die Verbindungsleitungen L1 wiederum quasi als "Ringleitung" miteinander elektrisch verbunden; die in dieser "Ringleitung" befindlichen Schaltelemente S1 und S2 jeder Phase stellen je nach ihrer Schaltstellung die elektrische Verbindung her.

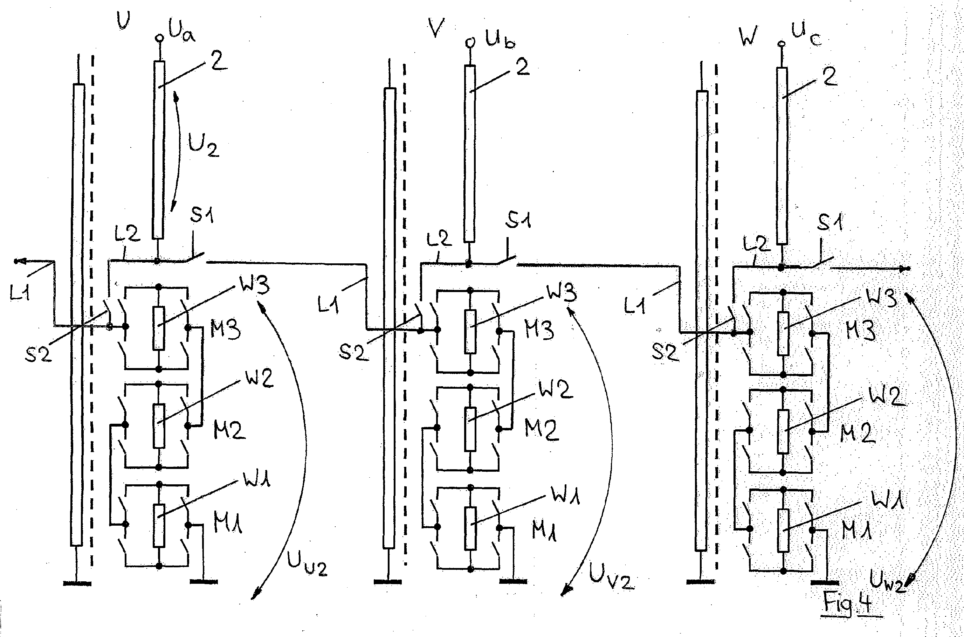

In Figur 4, die prinzipiell die in Figur 2 bereits erläuterte Ausführungsform darstellt, wurden Bezugszeichen für die an den einzelnen Phasen anstehenden Gesamtspannungen Uₐ, U_{b} und U_{c} sowie für die Spannung U₂, die über der Stammwicklung 2 abfällt, ferner für die Spannungen U_{U2}, U_{V2}, U_{W2}, die jeweils über dem Regelteil, der sich in jeder Phase aus den entsprechenden Modulen M1...M3 zusammensetzt, abfallen, ergänzt.

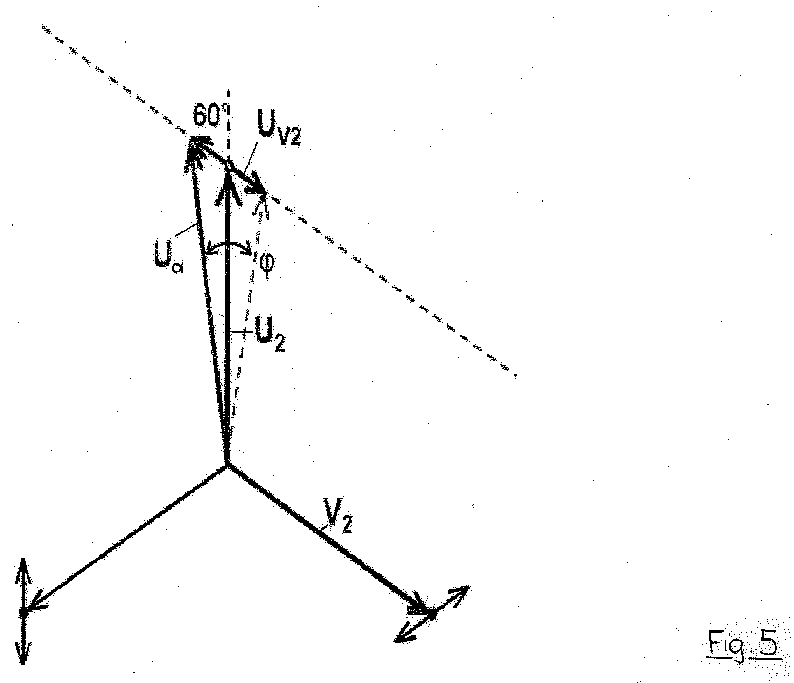

Figur 5 zeigt ein entsprechendes Zeigerdiagramm, das die Phasenverschiebung verdeutlicht. Dargestellt sind hier die Spannung U_{V2}, die sich als Regelspannung aus den Teilspannungen über den Teilwicklungen W1, W2 und W3 ergibt, ferner die Spannung U₂, die in Figur 4 bezeichnet ist. Im Ergebnis ergibt sich eine phasenverschobene Spannung Uₐ = U₂ + U_{V2}. Dabei bezeichnet ϕ den Phasendrehwinkel, d.h. den Winkel, um den die Phasenlage von U₂ verschoben wird.

Insgesamt gestattet der gezeigte Regeltransformator mit der beschriebenen Topologie eine schnelle Änderung der Windungsverhältnisse im Transformator und damit eine schnelle Änderung des Übersetzungsverhältnisses des Transformators. Eine der Voraussetzungen ist dabei die Erfassung der Phasenlage von Strom und Spannung, um die Halbleiterschalter zum richtigen Zeitpunkt ansteuern zu können. Durch die erfindungsgemäße Erweiterung um die beschriebenen Leitungen L1 und L2 und die in diese eingefügten Schalter S1 und S2 in jeder Phase, die quasi als Wechselschalter fungieren, und der Nutzung der bereits in der Steuerung des Halbleiterstufenschalters vorhandenen Informationen hinsichtlich der Phasenlage der Ströme auch der Nachbarphase, lässt sich im laufenden Betrieb des Regeltransformators eine Umschaltung der Wicklungsverschaltung von Stamm- und Regelwicklung vornehmen, so dass zwischen Längsregelbetrieb (Spannungsregelung) sowie Phasenschieberbetrieb (Drehung der Phasenlage von Ein- und Ausgangsspannung) des gleichen Transformators umgeschaltet werden kann.
Die einzelnen Halbleiter-Schaltelemente sind hier nur schematisch als einfache Schalter dargestellt. Sie umfassen in der Praxis parallel geschaltete Thyristorpaare, IGBT's oder andere Halbleiter-Schaltelemente. Sie können auch jeweils eine Reihen- oder Parallelschaltung mehrerer solcher einzelner Halbleiter-Schalterelemente umfassen.

## Patentansprüche

1. Regeltransformator zur Spannungsregelung mit Halbleiter-Schaltelementen mit einer Stammwicklung (2) und einer Regelwicklung mit mehreren Teilwicklungen (W1, W2, W3) für jede Phase,
wobei pro Phase mehrere Module (M1, M2, M3) vorgesehen sind, wobei jedes Modul (M1, M2, M3) jeweils eine Teilwicklung (W1, W2, W3) der Regelwicklung sowie beidseitig davon zwei Überbrückungspfade umfasst, wobei jeder Überbrückungspfad jeweils eine Reihenschaltung aus zwei Halbleiter-Schaltelementen umfasst, wobei jeweils zwischen den beiden in Reihe geschalteten Schaltelementen jedes Überbruckungspfades eine Mittenanzapfung vorgesehen ist, wobei die Teilwicklungen (W1, W2, W3) unterschiedliche Windungszahlen besitzen,
wobei jeweils eine der beiden Mittanzapfungen jedes Moduls (M1, M2, M3) mit einer Mittanzapfung der benachbarten Module verbunden ist und woben die eine verbleibende Mittenanzapfung des ersten Moduls (M1) mit der Lastableitung (4) und die eine verbleibende Mittenanzapfung des letzten Moduls (M3) mit dem Ende der StammWicklung (2) des Regeltransformators elektrisch verbunden ist,
**dadurch gekennzeichnet,**
**dass** in jeder Phase eine zusätzliche Verbindungsleitung (L1) vorgesehen ist, wobei in jeder der Verbindungsleitungen (L1) ein elektronisches Schaltelement (S1) eingefügt ist,
**dass** jede der Verbindungsleitungen (L1) die Mittenanzapfung des letzten Moduls (M3) der entsprechenden Phase mit dem Ende der Stammwicklung (2) der jeweils benachbarten Phase elektrisch verbindet,
**dass** in jeder Phase eine weitere Verbindungsleitung (L2) vorgesehen ist, in der jeweils ein weiteres elektronisches Schaltelement (S2) eingefügt ist und dass jede dieser weiteren Verbindungsleitungen (L2) jeweils die
Mittenanzapfung des letzten Moduls (M3) mit dem Ende der Stammwicklung (2) der eigenen Phase verbindet.

2. Regeltransformator zur Spannungsregelung mit Halbleiter-Schaltelementen mit einer Stammwicklung (2) einer Grobstufenwicklung (W3) und einer Regelwicklung mit mehreren Teilwicklungen (W1, W2) für jede Phase, wobei pro Phase mehrere Module (M1, M2, M3) vorgesehen sind,
wobei ein letztes Modul (M3) die Grobstufenwicklung (W3) und beidseitig davon zwei Überbrückungspfade umfasst,
wobei weitete Module (M1, M2) jeweils eine Teilwicklung (W1, W2) der Regelwicklung sowie beidseitig davon zwei Überbrückungspfade umfassen, wobei jeder Überbrückungspfad jeweils eine Reihenschaltung aus zwei Halbleiter-Schaltelementen umfasst,
wobei jeweils zwischen den beiden in Reihe geschalteten Schaltelementen jedes Überbrückungspfades eine Mittenanzapfung vorgesehen ist, wobei die Teilwicklungen (W1, W2) unterschiedliche Windungszahlen besitzen,
wobei jeweils eine der beiden Mittanzapfungen jedes Moduls (M1, M2, M3) mit einer Mittanzapfung der benachbarten Module verbunden ist und wobei die eine verbleibende Mittenanzapfung des ersten Moduls (M1) mit der Lastableitung (4) und die eine verbleibende Mittenanzapfung des letzten
Moduls (M3) mit dem Ende der Stammwicklung (2) des Regeltransforrmators elektrisch verbunden ist,
**dadurch gekennzeichnet,**
**dass** in jeder Phase eine zusätzliche Verbindungsleitung (L1) vorgesehen ist, wobei in jeder der Verbindungsleitungen (L1) ein elektronisches Schaltelement (S1) eingefügt ist,
**dass** jede der Verbindungsleitungen (L1) die Mittenanzapfung des zweiten Moduls (M2) jeder Phase mit den Mittenanzapfungen des letzten Moduls (M3) der jeweils anderen Phasen verbindet,
**dass** in jeder Phase eine weitere Verbindungsleitung (L2) vorgesehen ist, in der jeweils ein weiteres elektronisches Schaltelement (S2) eingefügt ist und dass die weitere Verbindungsleitung (L2) jeweils die Mittenanzapfung des zweiten Moduls (M2) mit der Mittenanzapfung des jeweiligen letzten Moduls (M3) der eigenen Phase verbindet.

3. Regeltransformator nach Anspruch 1 oder 2,
**dadurch gekennzeichnet,**
**dass** die elektronischen Schaltelemente (S1, S2) jeweils antiparallel geschaltete Thyristorpaare, IGBT's oder andere Halbleiter-Schaltelemente sind oder jeweils eine Reihen- oder Parallelschaltung mehrerer solcher einzetner Halbleifer Schalterelemente umfassen.

## Claims

1. Regulating transformer for voltage regulation with semiconductor switching components having a main winding (2) and a regulating winding with several partial windings (W1, W2, W3) for each phase,
wherein several modules (M1, M2, M3) are provided per phase,
wherein each module (M1, M2, M3) comprises a respective partial winding (W1, W2, W3) of the regulating winding and on both sides thereof two bypass paths,
wherein each bypass path comprises a respective series connection of two semiconductor switching components,
wherein a respective center tap is provided between each two serially connected switching components of each bypass path,
wherein the partial windings (W1, W2, W3) have different numbers of turns, wherein one of the two center taps of each module (M1, M2, M3) is connected with a center tap of the adjacent modules,
and wherein the one remaining center tap of the first module M1 is electrically connected with the load dissipation (4) and the one remaining center tap of the last module (M3) is electrically connected with the end of the main winding (2) of the regulating transformer,
**characterized in that**
an additional connecting line (L1) is provided in each phase wherein an electronic switching component (S1) is inserted into each of the connecting lines (L1),
each of the connecting lines (L1) electrically connects the center tap of the last module (M3) of the corresponding phase with the end of the main winding (2) of the respectively adjacent phase,
a further connecting line (L2) is provided in each phase with a further electronic switching component (S2) being inserted into each further connecting line (L2),
and each of these further connecting lines (L2) connects the center tap of the last module (M3) with the end of the main winding (2) of the own phase, respectively.

2. Regulating transformer for voltage regulation with semiconductor switching components having a main winding (2) of a coarse step winding (W3) and a regulating winding with several partial windings (W1, W2) for each phase, wherein several modules (M1, M2, M3) are provided per phase,
wherein a last module (M3) comprises the coarse step winding (W3) and on both sides thereof two bypass paths,
wherein further modules (M1, M2) comprise a respective partial winding (W1, W2) of the regulating winding and on both sides thereof two bypass paths, wherein each bypass path comprises a respective series connection of two semiconductor switching components,
wherein a respective center tap is provided between each two serially connected switching components of each bypass path,
wherein the partial windings (W1, W2) have different numbers of turns, wherein one of the two center taps of each module (M1, M2, M3) is connected with a center tap of the adjacent modules,
and wherein the one remaining center tap of the first module (M1) is electrically connected with the load dissipation (4) and the one remaining center tap of the last module (M3) is electrically connected with the end of the main winding (2) of the regulating transformer,
**characterized in that**
an additional connecting line (L1) is provided in each phase wherein an electronic switching component (S1) is inserted into each of the connecting lines (L1),
each of the connecting lines (L1) connects the center tap of a second module (M2) of each phase with the center taps of the last module (M3) of the respective other phases,
a further connecting line (L2) is provided in each phase with a further electronic switching component (S2) being inserted into each further connecting line (L2),
and the further connecting line (L2) connects the center tap of the second module (M2) with the center tap of the respective last module (M3) of the own phase, respectively.

3. Regulating transformer according to claim 1 or 2,
**characterized in that**
the electronic switching components (S1, S2) each are anti-parallelly connected thyristor pairs, IGBTs, or other semiconductor switching components or each comprise a series connection or parallel connection of a plurality of such individual semiconductor switching components.

## Revendications

1. Transformateur de réglage pour permettre une régulation de tension comprenant des éléments de commutation à semi-conducteur comportant un enroulement principal (2) et un enroulement de réglage ayant plusieurs enroulements partiels (W1, W2, W3) pour chacune des phases, dans lequel,
plusieurs modules (M1, M2, M3) sont prévus pour chaque phase, chacun des modules (M1, M2, M3) comprend respectivement un enroulement partiel (W1, W2, W3) de l'enroulement de réglage ainsi que de part et d'autre de celui-ci deux chemins de pontage,
chaque chemin de pontage comprend respectivement un montage en série de deux éléments de commutation à semi-conducteur,
entre les deux éléments de commutation branchés en série de chaque chemin de pontage, il est respectivement prévu une prise de réglage médiane,
les enroulements partiels (W1, W2, W3) ont des nombres différents de spires,
l'une des deux prises de réglage médianes de chaque module (M1, M2, M3) est respectivement reliée à une prise de réglage médiane du module voisin, et
l'une des prises de réglage médianes restantes du premier module (M1) est reliée électriquement à la ligne de sortie de charge (4) et l'une des prises de réglage médianes restantes du dernier module (M3) est reliée électriquement à l'extrémité de l'enroulement principal (2) du transformateur de réglage,
**caractérisé en ce que**
dans chaque phase il est prévu un conducteur de liaison (L1) supplémentaire,
dans chacun des conducteurs de liaison (L1) est inséré un élément de commutation électronique (S1),
chacun des conducteurs de liaison (L1) relie électriquement la prise de réglage médiane du dernier module (M3) de la phase correspondante avec l'extrémité de l'enroulement principal (2) de la phase respectivement voisine,
dans chaque phase il est prévu un autre conducteur de liaison (L2) dans lequel est respectivement inséré un autre élément de commutation électronique (S2), et
chacun de ces autres conducteurs de liaison (L2) relie respectivement la prise de réglage médiane du dernier module (M3) avec l'extrémité de l'enroulement principal (2) de la phase propre.

2. Transformateur de réglage pour permettre une régulation de tension comprenant des éléments de commutation à semi-conducteur, un enroulement principal (2), un enroulement à gradins grossier (W3) et un enroulement de réglage ayant plusieurs enroulements partiels (W1, W2) pour chacune des phases, dans lequel,
plusieurs modules (M1, M2, M3) sont prévus pour chaque phase,
le dernier module (M3) comprend l'enroulement à gradins grossier (W3) et de part et d'autre de celui-ci deux chemins de pontage,
les autres modules (M1, M2) comprennent respectivement un enroulement partiel (W1, W2) de l'enroulement de réglage ainsi que de part et d'autre de celui-ci deux chemins de pontage,
chaque chemin de pontage comprend respectivement un montage en série de deux éléments de commutation à semi-conducteur,
entre les deux éléments de commutation montés en série de chaque chemin de pontage il est prévu une prise de réglage médiane,
les enroulements partiels (W1, W2) ont des nombres de spires différents,
l'une des deux prises de réglage médianes respective de chaque module (M1, M2, M3) est relié à une prise de réglage médiane du module voisin, et
l'une des prises de réglage médianes restantes du premier module (M1) est reliée électriquement à ligne de sortie de charge (4) tandis que l'une des prises de réglage médianes restantes du dernier module (M3) est reliée électriquement à l'extrémité de l'enroulement principal (2) du transformateur de réglage,
**caractérisé en ce que**
dans chaque phase il est prévu un conducteur de liaison supplémentaire (L1),
dans chacun des conducteurs de liaison (L1) est inséré un élément de commutation électronique (S1),
chacun des conducteurs de liaison (L1) relie la prise de réglage médiane du second module (M2) de chaque phase avec la prise de réglage médiane du dernier module (M3) des autres phases respectives,
dans chacune des phases il est prévu un autre conducteur de liaison (L2) dans lequel est respectivement inséré un autre élément de commutation électronique (S2), et
l'autre conducteur de liaison (L2) relie respectivement la prise de réglage médiane du second module (M2) avec la prise de réglage médiane du dernier module respectif (M3) de la phase propre.

3. Transformateur de réglage conforme à la revendication 1 et 2,
**caractérisé en ce que**
les éléments de commutation électroniques (S 1, S2) sont respectivement des paires de thyristors branchés en antiparallèle des IGBT ou d'autres éléments de commutation à semi-conducteur, ou chacun des branchements en série et en parallèle comprend plusieurs éléments de commutation à semi-conducteur de ce type.
